# EUROPÄISCHE PATENTSCHRIFT

(11) **EP 1 405 039 B1**
(45) Veröffentlichungstag und Bekanntmachung des Hinweises auf die Patenterteilung: **20.02.2008**
(21) Anmeldenummer: 02780896.3
(22) Anmeldetag: 28.03.2002
(51) Int. Cl.: G01C 21/34

(54) **VERFAHREN ZUM BETRIEB EINES NAVIGATIONSSYSTEMS FÜR EIN FAHRZEUG UND NAVIGATIONSSYSTEM**
METHOD FOR OPERATING A NAVIGATION SYSTEM FOR A VEHICLE AND CORRESPONDING NAVIGATION SYSTEM
PROCEDE POUR EXPLOITER UN SYSTEME DE NAVIGATION DESTINE A UN VEHICULE ET SYSTEME DE NAVIGATION

(30) Priorität: 28.06.2001 DE 10131197
(43) Veröffentlichungstag der Anmeldung: 07.04.2004
(73) Patentinhaber: ROBERT BOSCH GMBH, 70442 Stuttgart (DE)
(72) Erfinder: DRAEGER, Gerd, 38102 Braunschweig (DE); SKWAREK, Volker, 31162 Bad Salzdetfurth (DE); BRENNER, Claus, 75015 Bretten (DE)
(86) Internationale Anmeldenummer: PCT/DE2002/001136
(87) Internationale Veröffentlichungsnummer: WO 2003/002943

(56) Entgegenhaltungen:
- EP-A- 0 932 132
- US-A- 5 982 298
- ALPER N ET AL: "Geospatial metadata querying and visualization on the WWW using Javaapplets" INFORMATION VISUALIZATION '96, PROCEEDINGS IEEE SYMPOSIUM ON SAN FRANCISCO, CA, USA 28-29 OCT. 1996, LOS ALAMITOS, CA, USA,IEEE COMPUT. SOC, US, 28. Oktober 1996 (1996-10-28), Seiten 77-84,128, XP010201953 ISBN: 0-8186-7668-X
- FRIENDLY L: "The design of distributed hyperlinked programming documentation" HYPERMEDIA DESIGN. PROCEEDINGS OF THE INTERNATIONAL WORKSHOP ON HYPERMEDIA DESIGN (IWHD'95), PROCEEDINGS OF INTERNATIONAL WORKSHOP ON HYPERMEDIA DESIGN, MONTPELLIER, FRANCE, 1-2 JUNE 1995, Seiten 151-162, XP002198069 1996, Berlin, Germany, Springer-Verlag, Germany ISBN: 3-540-19985-3
- GRONBAEK, K.: "OHS Interoperability - issues beyond the protocol" HYPERTEXT 98: PITTSBURGH, PA, USA, 20-24 JUNE 1998. OHS WORKSHOP 4.0, XP002210386 ISBN: 0-89791-972-6

## Beschreibung

### Technisches Gebiet

Die Erfindung betrifft ein Verfahren zum Betrieb eines Navigationssystems und ein Navigationssystem für ein Fahrzeug, insbesondere für ein Kraftfahrzeug, bei dem von einem Ortungssystem Daten zur geographischen Position ermittelt und an eine Einrichtung zur elektronischen Datenverarbeitung mit Zugriff auf eine Datenbank und eine digitale Straßenkarte übertragen werden und anhand dieser Daten der Standort des Fahrzeuges auf der digitalen Straßenkarte bestimmt wird und dem Fahrer des Fahrzeuges visuell und/oder akustisch Zielführungsanweisungen ausgegeben werden.

### Stand der Technik

Navigationssysteme für Fahrzeuge, insbesondere Kraftfahrzeuge, sowie Verfahren zum Betreiben derartiger Navigationssysteme sind bekannt. Diese dienen dazu, die aktuelle geographische Position des Fahrzeuges zu bestimmen und in Abhängigkeit eines vorgebbaren, zu erreichenden Zielpunktes die günstigste Fahrtroute zu berechnen und dem Fahrer Anweisungen zur Fahrtroute zu geben.

Die bekannten Navigationssysteme benötigen Informationen, die für die Bestimmung des aktuellen Standortes des Fahrzeuges und die Berechnung der Fahrtroute notwendig sind. Hierzu gehören insbesondere Straßenverläufe, Abbiegebedingungen und dergleichen. Diese Daten werden in Form einer Datenbasis bereitgestellt. Die Datenbasis umfasst hierzu beispielsweise eine so genannte digitale Karte, die Wegepunkte und/oder Entscheidungspunkte der möglichen Routen enthält. Bekannt ist, die Datenbasis auf fahrzeugfesten Massenspeichern, beispielsweise einer CD-ROM, vorzuhalten.

Ferner ist ein Ortungssystem notwendig, dass die aktuelle geographische Position des Fahrzeuges feststellt. Bekannt ist hierzu beispielsweise das satellitengestützte Global Positioning System (GPS).

Eine Einrichtung zur elektronischen Datenverarbeitung verarbeitet die vom Ortungssystem gelieferten Positionsdaten mit den in der digitalen Straßenkarte gespeicherten Daten und bestimmt die aktuelle Position des Fahrzeuges. Entsprechend dem gewählten Zielpunkt kann nunmehr durch die Einrichtung zur elektronischen Datenverarbeitung anhand von Wegepunkten und/oder Entscheidungspunkten auf einer ausgewählten günstigsten Fahrtroute dem Fahrer visuell und/oder akustisch eine Zielführungsinformation gegeben werden.

Die derzeit bekannten Navigationssysteme für Fahrzeuge bestehen im Wesentlichen aus einzelnen Komponenten mit unterschiedlichen Funktionen. Der Fahrer gibt bei Fahrtantritt zunächst seinen Zielwunsch über ein Eingabegerät dem Navigationssystem vor. Unter Verwendung einer Datenbasis wird daraufhin eine Routenliste durch ein Routenberechnungsmodul generiert. Diese wird in Verbindung mit der Fahrzeugortung von der Zielführung dazu verwendet, Fahranweisungen an den Fahrer zu generieren, welche in Form von graphischen Anweisungen oder natürlichsprachlich ausgegeben werden.

Die Interaktion der einzelnen Komponenten ist dabei fest vorgegeben. Beispielsweise wird die einmalig berechnete Routenliste nur dann verändert, wenn der Fahrer dies wünscht oder durch die Zielführung ein Verlassen der vorausberechneten Route detektiert wird.

Auch die Art der Ausgabe ist fest vorgegeben. Beispielsweise kann ein Benutzer die normalerweise zur Verfügung stehenden Bildsymbole nicht durch eigene Symbole ersetzen beziehungsweise um zusätzliche Informationen ergänzen.

Des Weiteren ist es schwierig, zusätzliche Funktionalität in das System einzubringen. Beispielsweise existieren Reiseführer auf Datenträgern, üblicherweise auf CD's, welche anstelle des Datenträgers für die sonst übliche digitale Karte eingesetzt werden können und die außer den minimal erforderlichen Daten zusätzliche Informationen, beispielsweise über Sehenswürdigkeiten, enthalten. Diese Informationen können dann über das Navigationsgerät abgerufen werden. Allerdings erfolgt dieser Informationsabruf über die vom Navigationsgerät definierte Schnittstelle, so dass der Gestaltungsspielraum für die Mensch-Maschine-Schnittstelle gering ist. Da außerdem die sonst übliche digitale Karte durch den Reiseführer ersetzt wird, muss sie auch alle für die Navigation relevanten Daten enthalten. Deshalb ist die Herstellung derartiger Reiseführer schwierig und es gibt nur wenige Anbieter. Lokale Reiseführer, welche beispielsweise nur eine einzige Stadt zum Gegenstand haben, werden praktisch nicht realisiert.

Ein weiteres Defizit besteht im Bereich der Georeferenzierung. Beispielsweise wäre es wünschenswert, wenn ein Reiseziel, beispielsweise ein Parkhaus, eine "Anfahrtsbeschreibung" in elektronischer Form zur Verfügung stellen würde, welche auf das Navigationsgerät aufgespielt werden kann. Dann wäre es möglich, Ziele zu erreichen, welche in der Karte nicht beziehungsweise nicht korrekt enthalten sind. So können Ziele erreicht werden, welche sich an Straßen befinden, für die keine Hausnummer-Information zur Verfügung steht, oder Zufahrten zu Gebäuden, die nicht erfasst sind (Parkhaus-Einfahrten, Hotelrezeptionen etc.). Zur Zeit existieren Ansätze zur Georeferenzierung, welche auf die Übermittlung von Daten beruhen. Aufgrund der unterschiedlichen Kartenformate verschiedener Anbieter sind diese jedoch schwierig zu realisieren.

Aus der EP 0 932 132 A2 ist ein Verfahren zum Betrieb eines Navigationssystems bekannt, bei dem von einem Ortungssystem für ein Fahrzeug Daten zur geographischen Position des Fahrzeugs ermittelt und zu einer Datenverarbeitung übertragen werden, die einen Zugriff auf eine Datenbank und eine digitale Straßenkarte hat. Anhand der Daten wird die Position des Fahrzeugs auf der digitalen Straßenkarte bestimmt und dem Fahrer des Fahrzeugs visuell und/oder akustische Zielführungsanweisungen ausgegeben. Zusätzliche Informationen, die für die Navigation relevant sind, werden in Form von Benutzer-Programmen als sogenannte Navlets auf das Navigationssystem geladen und können vom Fahrer oder anderen Personen im Fahrzeug benutzt werden. Das Navigationssystem besteht aus zwei Haupteinheiten, eine für die Komponenten des Navigationsgerätes, welches autark funktionsfähig ist, und die andere für die Ausführung von Benutzer-Programmen, welche über Schnittstellen mit den Komponenten des Navigationsgerätes in Verbindung stehen.

### Darstellung der Erfindung, Aufgaben, Lösung, Vorteile

Es ist Aufgabe der vorliegenden Erfindung, ein Verfahren zum Betrieb eines Navigationssystems für ein Fahrzeug sowie ein Navigationssystem der gattungsgemäßen Art zu schaffen, mit denen in einfacher Weise zusätzliche Informationen im Navigationssystem gespeichert werden, die bei Bedarf vom Fahrer und/oder anderen im Fahrzeug befindlichen Personen abgerufen und über das Navigationssystem ausgegeben werden können.

Diese Aufgabe wird erfindungsgemäß durch ein Verfahren der oben genannten Art mit den im Anspruch 1 genannten Merkmalen gelöst.

Dadurch, dass zusätzliche Informationen, die für die Navigation relevant sind, in Form von Benutzer-Programmen auf das Navigationsgerät geladen und als so genannte Navlets gespeichert werden, ist es vorteilhaft, möglich, in einfacher Weise zusätzliche Informationen im Navigationssystem zu speichern, die bei Bedarf vom Fahrer und/oder anderen im Fahrzeug befindlichen Personen abgerufen und über das Navigationssystem ausgegeben werden können.

Da die Navlets Zugriff auf die Ausgabeeinheiten haben, ist die Voraussetzung dafür gegeben, die Mensch-Maschine-Schnittstelle im Navigationssystem in vorteilhafter Weise zu verändern. Beispielsweise ist es möglich, ein Navlet zur Verfügung zu stellen, welches die Eingabe des Reisezieles in einer neuartigen Form erlaubt. Nach der Bestätigung des Zieles durch den Benutzer wird dieses an die Navigation übergeben und das Navlet terminiert.

Ein weiterer Vorteil der Erfindung besteht darin, dass die Navlets keineswegs immer in Verbindung mit einer (navigierbaren) Karteninformation stehen müssen. Beispielsweise könnte eine Hotelkette ein Navlet zur Verfügung stellen, welches den Zugriff auf alle Hotels der Kette in Deutschland ermöglicht. Dieses Verzeichnis könnte nicht nur umfangreiche Informationen zur Lage, Kategorie und Zimmerzahl enthalten. Vielmehr könnten Ansichten und kurze Videoclips die Wahl eines Hotels erleichtern. Entscheidet sich der Fahrer für ein Hotel, dann wird jedoch nur die Adresse dieses Hotels an die Navigation weitergegeben und das Navlet terminiert.

Da es sich bei den Navlets um Programme handelt, ist es vorteilhafterweise möglich, dass die Kontrolle über den Navigationsablauf durch Navlets erfolgt. Beispielsweise kann ein Navlet einen Touristenführer für eine Stadt beinhalten. Wird das Navlet gestartet, übergibt es den ersten anzusteuernden Ort an die Navigation, die daraufhin den Benutzer leitet. Das Navlet ist unterdessen in der Lage, Informationen zum ersten Ziel über den Bildschirm oder den Audiokanal auszugeben. Ist das erste Ziel erreicht, kann das Navlet das nächste Ziel an die Navigation übergeben. Diese Vorgänge können beliebig fortgeführt werden, bis das endgültige Fahrtziel erreicht ist.

Ein weiterer Vorteil der Erfindung ist dadurch begründet, dass die Navlets das interne Kartenformat des entsprechenden Navigationsgerätes nicht kennen müssen. Es reicht völlig aus, wenn über eine definierte Schnittstelle Daten mit dem Navigationsgerät ausgetauscht werden, insbesondere Adressen (beispielsweise in Form von Ort-Straße-Hausnummer) oder Koordinaten (beispielsweise in Form WGS 84). Da es sich bei den Navlets um Programme handelt, besteht vorteilhafterweise die Möglichkeit, dass der Typ des Navigationsgerätes abgefragt und dadurch geräte- und/oder datenspezifische Vorteile des jeweiligen Navigationsgerätes effektiv genutzt werden.

Ein weiterer Vorteil ist darin zu sehen, dass die Georeferenzierung von Objekten durch den Einsatz von Navlets vereinfacht wird. So sind derzeitig verschiedene Konzepte im Gespräch, wie die Georeferenzierung mittels Daten beschrieben werden kann. Wird eine derartige Georeferenzierung eines Zieles auf das erfindungsgemäße Navigationssystem geladen, so ist dies in der Lage, die zugehörige Route zu berechnen, auch wenn das Ziel selbst nicht in der Kartenbasis enthalten ist. Darüber hinaus bestehen durch die Erfindung noch weitergehende Möglichkeiten: Beispielsweise ist es möglich, dass Navlets aktiv zum Ziel führen. Dabei können einerseits die Möglichkeiten des Navigationssystems genutzt werden, andererseits können Navlets eigene Fahranweisungen in Form von gesprochenen Texten, Bildern und Videos enthalten. Damit besteht grundsätzlich die Möglichkeit einer individuellen Zielführung, die auf den Bedarf des jeweiligen Kunden zugeschnitten ist.

Es ist weiterhin von Vorteil, dass die Navlets einen Mechanismus zur ortsspezifischen Benachrichtigung enthalten. Bestimmte Funktionen des Navlets können vom Navigationssystem aufgerufen werden, wenn sich das Fahrzeug in der Nähe eines vorgegebenen Punktes oder innerhalb eines Gebietes (Bundesland, Kreis, Stadt, Stadtteil etc.) befindet oder wenn eine Adresse (momentane Position, momentanes Ziel) mit einer gegebenen Adresse übereinstimmt. Beispielsweise ist es möglich, dass bei der Eingabe eines Hotels über das Navigationssystem das entsprechende Navlet automatisch startet und assistiert, In einem anderen Szenario kann ein kleines Icon (mit Entfernungsangabe) automatisch auf dem Bildschirm erscheinen, wenn sich das Fahrzeug einem Restaurant einer Fast-Food-Kette nähert. In einem weiteren Szenario kann ein Drittanbieter ein Navlet anbieten, welches (aktuelle) Umleitungsempfehlungen für das gesamte Bundesgebiet enthält. Sobald das Fahrzeug sich einer entsprechenden Stelle nähert, wird das Navlet automatisch gestartet und gibt die jeweiligen Empfehlungen aus.

Insgesamt gesehen, besteht der entscheidende Vorteil der Erfindung darin, dass alle Informationen, die für die Navigation relevant sind, in Form von Benutzer-Programmen auf das Navigationsgerät geladen werden. Die Benutzer-Programme haben dabei als so genannte Navlets eine ähnliche Funktion wie die in Verbindung mit den Internet-Browsern verwendeten, plattformunabhängigen Applets. Insofern besteht ein wesentlicher Unterschied zu derzeitigen Entwicklungen von Navigationssystemen, bei denen Informationen lediglich in Form von Daten auf das Navigationsgerät geladen werden.

In bevorzugter Ausgestaltung der Erfindung ist vorgesehen, dass von den Navlets über Schnittstellen des Navigationssystems die Funktionen des Navigationsteiles genutzt werden.

Eine weitere bevorzugte Ausgestaltung der Erfindung sieht vor, dass von den Navlets insbesondere solche Funktionen des Navigationsteils genutzt werden, wie
- Abfrage und Setzen von' Zielen und Zwischenzielen durch Zieladressen oder Zielkoordinaten;
- Abfrage der gegenwärtigen Position als Text oder Koordinaten;
- Abfrage der aktuellen Routenliste;
- Abfrage der geschätzten Fahrzeit zum nächsten (Teil-)Ziel;
- Funktionen zum Setzen von Parametern, beispielsweise die Zeiten für zeitperiodische Aufrufe beziehungsweise die Kriterien für geometrische Benachrichtigung;
- Abfrage des Typs des Navigationsteiles und des Revisionsstandes der Firmware, des Typs und des Revisionsstandes der Datenbasis (Karte) etc.

Ferner ist in bevorzugter Ausgestaltung der Erfindung vorgesehen, dass von jedem Navlet bestimmte Funktionen ausgeführt werden, wovon der eine Teil der Funktionen auf den jeweiligen Bedarf des Nutzers ausgerichtet ist und der andere Teil der Funktionen standardmäßig vorgegeben wird.

Die erfindungsgemäße Aufgabe wird ferner durch ein Navigationssystem der oben genannten Art mit den im Anspruch 10 gekennzeichneten Merkmalen gelöst. Dadurch, dass das Navigationssystem aus zwei Haupteinheiten besteht, wovon die erste Haupteinheit ein Navigationsteil mit den Komponenten eines Navigationsgerätes ist, wobei das Navigationsgerät autark funktionsfähig ist, und die zweite Haupteinheit ein Geräteteil für die Ausführung von Benutzer-Programmen ist, das über Schnittstellen mit dem Navigationsteil in Verbindung steht, ist es vorteilhaft möglich, ein Navigationssystem bereitzustellen, mit dem in einfacher Weise zusätzliche Informationen im Navigationssystem speicherbar sind, die bei Bedarf vom Fahrer und/oder anderen im Fahrzeug befindlichen Personen abgerufen und über das Navigationssystem ausgegeben werden können.

Weitere bevorzugte Ausgestaltungen der Erfindung ergeben sich aus den in den Unteransprüchen genannten Merkmalen.

### Kurze Beschreibung der Zeichnungen

Nachstehend wird die Erfindung in einem Ausführungsbeispiel anhand der beigefügten Zeichnungen näher erläutert. Es zeigen:
- Fig.1: eine Prinzipdarstellung eines Navigationssystems des Standes der Technik und
- Fig. 2: eine Prinzipdarstellung des erfindungsgemäß Navigationssystems.

### Bester Weg zur Ausführung der Erfindung

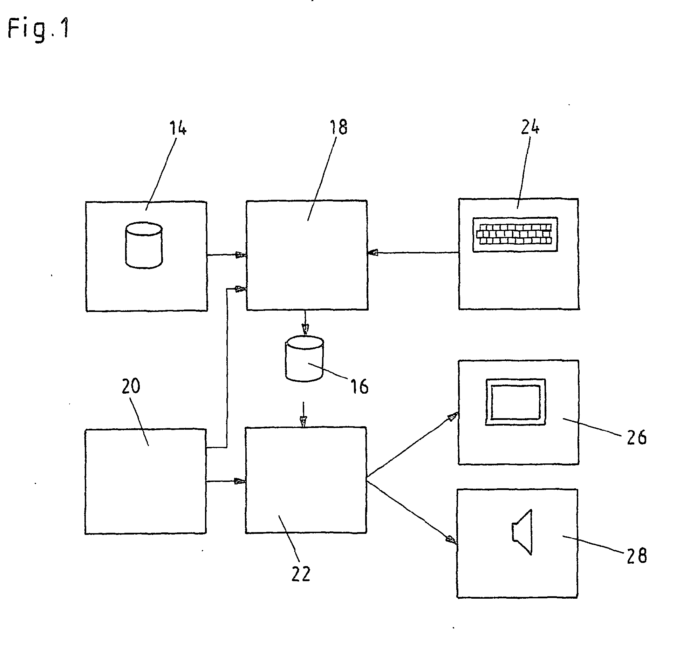

Fig. 1 zeigt schematisch ein Navigationssystem für ein Kraftfahrzeug, wie es zur Zeit allgemein bekannt ist und in üblicher Bauart in einem Kraftfahrzeug Anwendung findet. Das Navigationssystem besteht aus mehreren einzelnen Komponenten, die miteinander in funktioneller Verbindung stehen.

Das Navigationssystem umfasst im Wesentlichen die Komponenten Datenbank 14, Routenliste 16, Routenberechnungsmodul 18, Ortungssystem 20 und Zielführungseinheit 22.

Das Navigationssystem umfasst ferner eine Eingabeeinheit 24, in welche der Fahrer vor Fahrtantritt sein Fahrtziel eingibt, sowie als Ausgabeeinheiten eine visuelle Ausgabeeinheit 26, beispielsweise ein Display oder dergleichen, und eine akustische Ausgabeeinheit 28, beispielsweise einen Lautsprecher oder dergleichen.

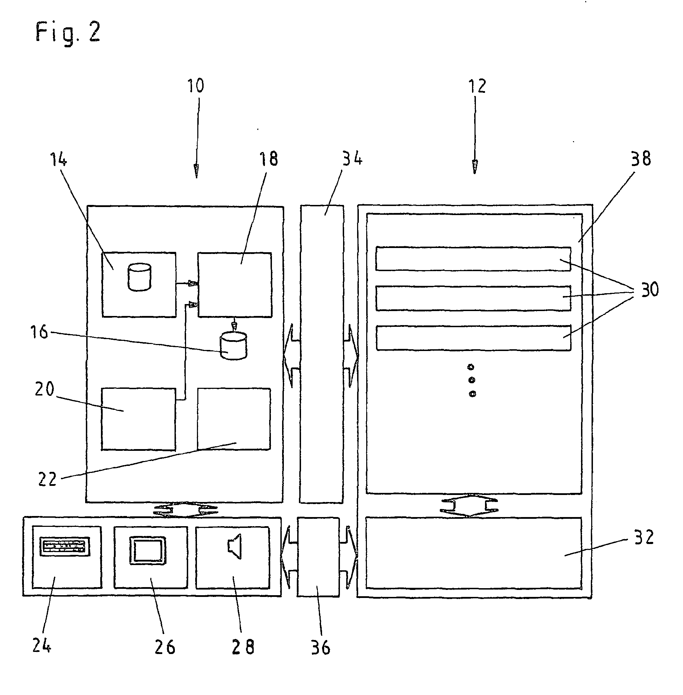

In Fig. 2 ist schematisch das erfindungsgemäße Navigationssystem dargestellt. Das Navigationssystem ist jeweils einem Fahrzeug zugeordnet. Es besteht aus zwei Haupteinheiten 10, 12, die über zwei Schnittstellen 34, 36 in Verbindung stehen. Die eine Haupteinheit ist ein Navigationsteil 10 mit den Komponenten eines herkömmlichen Navigationsgerätes, wobei das Navigationsgerät autark funktionsfähig ist. Die andere Haupteinheit ist ein Geräteteil 12 für die Ausführung von Benutzer-Programmen.

Der Navigationsteil 10 des erfindungsgemäßen Navigationssystems entspricht in seinem prinzipiellen Grundaufbau dem in Figur 1 dargestellten Navigationssystem allgemein bekannter Bauart. Der Navigationsteil 10 umfasst dementsprechend im Wesentlichen eine Datenbank 14, eine Routenliste 16, ein Routenberechnungsmodul 18, ein Ortungssystem 20 und eine Zielführungseinheit 22. Des Weiteren gehören zum Navigationsteil 10 eine Eingabeeinheit 24 zum Bedienen des Navigationssystems und jeweils eine visuelle Ausgabeeinheit 26 für die Ausgabe visueller und eine akustische Ausgabeeinheit 28 für die Ausgabe akustischer Anweisungen und Informationen.

In einer bevorzugten Ausgestaltung der Erfindung ist vorgesehen, dass der Geräteteil 12 des Navigationssystems im Wesentlichen aus einem Benutzerspeicher 38 und einer virtuellen Maschine 32 besteht. Im Benutzerspeicher 38 sind vorteilhafterweise die Navlets 30 in unterschiedlicher Anzahl speicherbar. Der Geräteteil 12 des Navigationssystems steht jeweils über zwei Schnittstellen 34, 36 mit dem Navigationsteil 10 in Verbindung.

Im Unterschied zu Betriebssystem- beziehungsweise Firmware-Updates betreffen Navlets 30 vorteilhafterweise nicht das eigentliche Betriebssystem der Navigation. Vielmehr handelt es sich um Applikationen, die innerhalb eines Betriebssystems beziehungsweise einer virtuellen Maschine 32 ausgeführt werden und Zugriff auf High-Level-Funktionen der Navigationssysteme besitzen. Der Vorteil der Erfindung besteht somit darin, dass es einem breiten Kreis von Personen ermöglicht wird, Navlets 30 zu programmieren und zur Verfügung zu stellen. Durch die Erfindung wird es möglich, dass mit den Navlets 30 für Navigationssysteme in Fahrzeugen ähnliche Vorteile erreicht werden, wie mit den Applets innerhalb des Internets.

Gemäß einer weiteren bevorzugten Ausgestaltung der Erfindung können zusätzlich zu den vorhandenen Schnittstellen 34, 36 weitere Schnittstellen (nicht dargestellt) zur Datenübertragung, insbesondere mittels Infrarot oder Funk, vorgesehen sein, die von den Navlets 30 aktivierbar und nutzbar sind.

Im Navigationssystem stehen jeweils der Benutzerspeicher 38 über eine erste Schnittstelle 34 mit dem Navigationsgerät und über eine zweite Schnittstelle 36 mit der Eingabeeinheit 24 und den visuellen und akustischen Ausgabeeinheiten 26, 28 in Verbindung.

Von besonderem Vorteil ist, dass die Navlets 30 in einer plattformunabhängigen Programmiersprache, vorzugsweise in der Programmiersprache "JAVA", geschrieben werden. Dadurch können die Navlets 30 flexibel in Navigationssystemen verwendet werden.

Jedes Navlet 30 ist vorteilhafterweise so aufgebaut, dass es über interne Daten und Funktionen verfügt. Neben den internen Daten und Funktionen verfügt jedes Navlet 30 über standardgemäße Mindestfunktionen. Zu den standardgemäßen Mindestfunktionen gehören solche Funktionen, wie
- Initialisierungs-Funktion;
- Lösch-Funktion;
- Start-Funktion;
- Funktion für zeitperiodische Aufrufe;
- Text-Benachrichtigung;
- geometrische Benachrichtigung;
- weitere Benachrichtigungsfunktionen.

Eine bevorzugte Ausgestaltung der Erfindung sieht vor, dass die Navlets 30 auf unterschiedliche Weise in den Benutzerspeicher 38 ladbar sind. Hierzu können verschiedene Ausführungsvarianten vorgesehen sein.

Eine mögliche Variante ist, dass die Navlets 30 durch ein Speichermedium, vorzugsweise RAM, Flash ROM, Mini-Harddisk, CD-ROM oder DVD, in den Benutzerspeicher 38 ladbar sind.

Eine andere Variante besteht darin, dass die Navlets 30 durch drahtgebundene oder drahtlose Übertragung, beispielsweise Infrarot oder Funk, von einem PC, Laptop oder PDA in den Benutzerspeicher 38 ladbar sind.

Eine weitere Variante ist darin zu sehen, dass die Navlets 30 durch Übertragung von einem Server über Broadcast, beispielsweise DAB, oder individuelle Kommunikation, beispielsweise GSM, in den Benutzerspeicher 38 ladbar sind.

Das anhand der Fig. 2 schematisch dargestellte Navigationssystem wird gemäß dem nachfolgend erläuterten erfindungsgemäßen Verfahren betrieben.

Das erfindungsgemäße Verfahren sieht vor, dass zusätzliche Informationen, die für die Navigation relevant sind, in Form von Benutzer-Programmen auf das Navigationssystem geladen werden, die als Navlets 30 vom Fahrer und/oder anderen im Fahrzeug befindlichen Personen nutzbar sind.

Dabei ist vorteilhafterweise vorgesehen, dass von den Navlets 30 über Schnittstellen 34, 36 des Navigationssystems die Funktionen des Navigationsteiles 10 genutzt werden. Von den Funktionen des Navigationsteiles 10 werden durch die Navlets 30 insbesondere solche Funktionen genutzt, wie
- Abfrage und Setzen von Zielen und Zwischenzielen durch Zieladressen oder Zielkoordinaten;
- Abfrage der gegenwärtigen Position als Text oder Koordinaten;
- Abfrage der aktuellen Routenliste 16;
- Abfrage der geschätzten Fahrzeit zum nächsten (Teil-)Ziel;
- Funktionen zum Setzen von Parametern, beispielsweise die Zeiten für zeitperiodische Aufrufe beziehungsweise die Kriterien für geometrische Benachrichtigung;
- Abfrage des Typs des Navigationsteiles 10 und des Revisionsstandes der Firmware, des Typs und des Revisionsstandes der Datenbasis (Karte) etc.

Jedes Navlet 30 führt vorteilhafterweise vorgegebene Funktionen aus. Ein Teil der Funktionen des Navlet 30 ist auf den jeweiligen Bedarf der Nutzer, also auf den Bedarf des Fahrers des Fahrzeuges und gegebenenfalls weiterer Fahrzeuginsassen, ausgerichtet. Ein anderer Teil der Funktionen des Navlet 30 ist standardmäßig vorgegeben.

Jedes Navlet 30 verfügt über eine Initialisierungs-Funktion, die aufgerufen wird, wenn das Navlet 30 zum ersten Mal auf dem Navigationssystem installiert wird. Diese Funktion kann vorteilhafterweise dazu genutzt werden, dem Benutzer die Funktionsweise der Navlets 30 zu erklären oder um Präferenzen des Benutzers abzufragen.

Jedes Navlet 30 verfügt weiterhin über eine Lösch-Funktion, die aufgerufen wird, wenn das Navlet 30 entfernt wird.

Als weitere Funktion ist für jedes Navlet 30 eine Start-Funktion vorgegeben, die beim Start des Fahrzeuges oder beim Start der Navigation einmalig aufgerufen wird.

Des Weiteren verfügt jedes Navlet 30 über eine Funktion für zeitperiodische Aufrufe, die in regelmäßigen Zeitabständen aufgerufen und vom Navlet 30 dazu verwendet wird, interne Daten zu aktualisieren.

Zusätzlich ist vorgesehen, dass jedes Navlet 30 über eine Text-Benachrichtigung verfügt, die aufgerufen wird, wenn eine Übereinstimmung oder teilweise Übereinstimmung eines gegebenen Textes mit der momentanen Zieladresse, Zwischenzieladresse, Adresse der momentanen Position oder einem Eintrag in der Routenliste 16 vorliegt, wobei für die verschiedenen Kriterien unterschiedliche Benachrichtigungsfunktionen definiert werden können.

Weiterhin verfügt jedes Navlet 30 über eine geometrische Benachrichtigung, die aufgerufen wird, wenn ein vordefiniertes, geometrisches Kriterium erfüllt ist. Geometrische Kriterien können beispielsweise die Distanz zu einem gegebenen Punkt oder die Lage innerhalb einer bestimmten Region (Bundesland, Kreis, Stadt, Stadtteil) sein.

Darüber hinaus verfügt jedes Navlet 30 über weitere Benachrichtigungsfunktionen, wie Eingang einer Traffic-Message-Channel (TMC)-Meldung oder einer Meldung eines anderen Dienstes, beispielsweise des GSM.

Der Vertrieb der Navlets 30 kann vorteilhafterweise über konventionelle Medien, beispielsweise CD-ROM und DVD, oder über das Internet erfolgen. Es ist auch denkbar, dass Unternehmen Navlets 30 kostenfrei auf ihrer Homepage im Internet zur Verfügung stellen, um ihren Kunden die Anfahrt zu erleichtern und/oder die Navigation des Fahrzeuges mit Werbung zu verbinden.

## Patentansprüche

1. Verfahren zum Betrieb eines Navigationssystems für ein Fahrzeug, insbesondere Kraftfahrzeug, bei dem von einem Ortungssystem (2) Daten zu geographischen Positionen des Fahrzeuges ermittelt und an eine Einrichtung zur elektronischen Datenverarbeitung mit Zugriff auf die Datenbank (14) und eine digitale Straßenkarte übertragen werden und anhand dieser Daten der Standort des Fahrzeugs auf der digitalen Straßenkarte bestimmt wird und dem Fahrer des Fahrzeuges visuell und/oder akustisch Zielführungsanweisungen ausgegeben werden, wobei zusätzliche Informationen, die für die Navigation relevant sind, in Form von Innerhalb eines Betriebssystems plattformunabhängigen und unabhängig vom Betriebssystem ausführbaren Benutzer-Programmen (30) auf das Navigationssystem geladen werden, wobei von jedem dieser Benutzer-Programme (30) bestimmte Funktionen ausgeführt werden, wovon der eine Teil der Funktionen auf den jeweiligen Bedarf des Nutzers ausgerichtet ist und der andere Teil der Funktionen standardmäßig vorgegeben wird, um zusätzliche Informationen im Navigationssystem zu speichern, wobei diese vom Fahrer und/oder anderen im Fahrzeug befindlichen Personen abgerufen und über das Navigationssystem ausgegeben werden können und wobei jedes dieser Benutzer-Programme (30) über eine Text-Benachrichtigung verfügt, die aufgerufen wird, wenn eine Übereinstimmung oder teilweise Übereinstimmung eines gegebenen Textes mit der momentanen Zieladresse, Zwischenzieladresse, Adresse der momentanen Position oder einem Eintrag in der Routenliste (16) vorliegt, wobei für die verschiedenen Kriterien unterschiedliche Benachrichtigungsfunktionen definiert werden können.

2. Verfahren nach Anspruch 1, **dadurch gekennzeichnet, dass** von den Benutzer-Programmen (30) über Schnittstellen (34, 36) des Navigationssystems die Funktionen des Navigationsteiles (10) genutzt werden.

3. Verfahren nach Anspruch 1, **dadurch gekennzeichnet, dass** von den Benutzer-Programmen (30) folgende Funktionen des Navigationsteiles (10) genutzt werden:
- Abfrage und Setzen von Zielen und Zwischenzielen durch Zieladressen oder Zielkoordinaten;
- Abfrage der gegenwärtigen Position als Text oder Koordinaten;
- Abfrage der aktuellen Routenliste (16);
- Abfrage der geschätzten Fahrzeit zum nächsten (Teil-)Ziel;
- Funktion zum Setzen von Parametern, beispielsweise die Zeiten für zeitperiodische Aufrufe beziehungsweise die Kriterien für geometrische Benachrichtigungen;
- Abfrage des Typs des Navigationssystems (10) und des Revisionsstandes der Firmware, des Typs und des Revisionsstandes der Datenbasis (Karte) etc.

4. Verfahren nach Anspruch 3, **dadurch gekennzeichnet, dass** jedes Benutzer-Programm (30) über eine Initialisierungs-Funktion verfügt, die aufgerufen wird, wenn das Benutzer-Programm (30) zum ersten Mal auf dem Navigationssystem installiert wird.

5. Verfahren nach Anspruch 3, **dadurch gekennzeichnet, dass** jedes Benutzer-Programm (30) über eine Lösch-Funktion verfügt, die aufgerufen wird, wenn das Benutzer-Programm (30) entfernt wird.

6. Verfahren nach Anspruch 3, **dadurch gekennzeichnet, dass** jedes Benutzer-Programm (30) über eine Start-Funktion verfügt, die beim Start des Fahrzeugs oder beim Start der Navigation einmalig aufgerufen wird.

7. Verfahren nach Anspruch 3, **dadurch gekennzeichnet, dass** jedes Benutzer-Programm (30) über eine Funktion für zeitperiodische Aufrufe verfügt, die in regelmäßigen Zeitabständen aufgerufen und vom Benutzer-Programm (30) dazu verwendet wird, interne Daten zu aktualisieren.

8. Verfahren nach Anspruch 3, **dadurch gekennzeichnet, dass** jedes Benutzer-Programm (30) über eine geometrische Benachrichtigung verfügt, die aufgerufen wird, wenn ein vordefiniertes, geometrisches Kriterium erfüllt ist, insbesondere ein solches Kriterium wie Distanz zu einem gegebenen Punkt oder die Lage innerhalb einer bestimmten Region.

9. Verfahren nach Anspruch 3, **dadurch gekennzeichnet, dass** jedes Benutzer-Programm (30) über weitere Benachrichtigungsfunktionen verfügt, wie Eingang einer Traffic-Message-Channel (TMC)-Meldung oder einer Meldung eines anderen Dienstes, beispielsweise des GSM.

10. Navigationssystem für ein Fahrzeug, insbesondere ein Kraftfahrzeug, mit einem Ortungssystem (20), einer Einrichtung zur elektronischen Datenverarbeitung, die Zugriff auf eine Datenbank (14) mit einer digitalen Straßenkarte hat, einer Eingabeeinheit (24) und Ausgabeeinheit (26, 28) für eine visuelle und/oder akustische Zielführungsanweisung, wobei das Navigationssystem aus zwei Haupteinheiten (10, 12) besteht, wovon die eine Haupteinheit ein Navigationsteil (10) mit den Komponenten eines Navigationsgerätes ist, wobei das Navigationsgerät autark funktionsfähig ist, und die andere Haupteinheit ein Geräteteil (12) für die Ausführung von Benutzer-Programmen (30) ist, der über Schnittstellen (34, 36) mit dem Navigationsteil (10) in Verbindung steht, wobei die Benutzer-Programme (30) innerhalb des Betriebssystems plattformunabhängig und unabhängig vom Betriebssystem ausführbar ausgestaltet sind, wobei von jedem Benutzer-Programm (30) bestimmte Funktionen ausführbar sind, wobei der eine Teil der Funktionen auf den Bedarf des Nutzers ausgerichtet ist und der andere Teil der Funktionen standardmäßig vorgegeben ist und wobei jedes Benutzer-Programm (30) über eine Text-Benachrichtigung verfügt, die aufgerufen wird, wenn eine Übereinstimmung oder teilweise Übereinstimmung eines gegebenen Textes mit der momentanen Zieladresse, Zwischenadresse, Adresse der momentanen Position oder einem Eintrag in der Routenliste (16) vorliegt, wobei für die verschiedenen Kriterien unterschiedliche Benachrichtigungsfunktionen definiert werden können.

11. Navigationssystem nach Anspruch 10, **dadurch gekennzeichnet, dass** der Navigationsteil (10) des Navigationssystems im wesentlichen aus einer Datenbank (14), einer Routenliste (16), einem Routenberechnungsmodell (18), einem Ortungssystem (20), einer Zielführungseinheit (22), einer Eingabeeinheit (24) zum Bedienen des Navigationssystems und jeweils einer akustischen Ausgabeeinheit (28) für die Ausgabe akustischer und einer visuellen Ausgabeeinheit (26) für die Ausgabe visueller Anweisungen und Informationen besteht.

12. Navigationssystem nach den Ansprüchen 10 und 11, **dadurch gekennzeichnet, dass** der Geräteteil (10) des Navigationssystems im wesentlichen aus einem Benutzerspeicher (38) und einer virtuellen Maschine (32) besteht.

13. Navigationssystem nach den Ansprüchen 10 und 12, **dadurch gekennzeichnet, dass** im Benutzerspeicher (38) die Benutzer-Programme (30) speicherbar sind.

14. Navigationssystem nach den Ansprüchen 10 und 13, **dadurch gekennzeichnet, dass** der Geräteteil (12) des Navigationssystems vorzugsweise über zwei Schnittstellen (34, 36) mit dem Navigationsteil (10) in Verbindung steht.

15. Navigationssystem nach Anspruch 14, **dadurch gekennzeichnet, dass** jeweils der Benutzerspeicher (38) über eine erste Schnittstelle (34) mit dem Navigationsgerät und die virtuelle Maschine (32) über eine zweite Schnittstelle (36) mit der Eingabeeinheit (24) und den Ausgabeeinheiten (26, 28) in Verbindung stehen.

16. Navigationssystem nach den Ansprüchen 10 und 15, **dadurch gekennzeichnet, dass** zusätzlich zu den vorhandenen Schnittstellen (34, 36) weitere Schnittstellen zur Datenübertragung, insbesondere mittels Infrarot oder Funk, vorgesehen sind, die von den Benutzer-Programmen (30) aktivierbar und nutzbar sind.

17. Navigationssystem nach Anspruch 10, **dadurch gekennzeichnet, dass** die Benutzer-Programme (30) vorzugsweise in einer plattformunabhängigen Programmiersprache geschrieben sind.

18. Navigationssystem nach Anspruch 17, **dadurch gekennzeichnet, dass** die Benutzer-Programme (30) vorzugsweise in der Programmiersprache "JAVA" geschrieben sind.

19. Navigationssystem nach den Ansprüchen 10 und 19, **dadurch gekennzeichnet, dass** jedes Benutzer-Programm (30) über interne Daten und Funktionen verfügt.

20. Navigationssystem nach Anspruch 19, **dadurch gekennzeichnet, dass** jedes Benutzer-Programm (30) neben den internen Daten und Funktionen über standardmäßige Mindestfunktionen verfügt.

21. Navigationssystem nach Anspruch 21, **dadurch gekennzeichnet, dass** die standardmäßigen Mindestfunktionen der Benutzer-Programme (30) folgende Funktionen sind:
- Initialisierungs-Funktion;
- Lösch-Funktion;
- Start-Funktion;
- Funktion für zeitperiodische Aufrufe;
- Text-Benachrichtigung;
- geometrische Benachrichtigung;
- weitere Benachrichtigungsfunktionen.

22. Navigationssystem nach einem der vorhergehenden Ansprüche, **dadurch gekennzeichnet, dass** die Benutzer-Programme (30) auf unterschiedliche Weise in den Benutzerspeicher (38) ladbar sind.

23. Navigationssystem nach Anspruch 22, **dadurch gekennzeichnet, dass** die Benutzer-Programme (30) durch ein Speichermedium, vorzugsweise RAM, Flash-ROM, Mini-Harddisk, CD-ROM oder DVD, in den Benutzerspeicher (38) ladbar sind.

24. Navigationssystem nach Anspruch 22, **dadurch gekennzeichnet, dass** die Benutzer-Programme (30) durch drahtgebundene oder drahtlose Übertrag, beispielsweise Infrarot oder Funk, von einem PC, Laptop oder PDA in den Benutzerspeicher (38) ladbar sind.

25. Navigationssystem nach Anspruch 22, **dadurch gekennzeichnet, dass** die Benutzer-Programme (30) durch Übertragung von einem Server über Broadcast, beispielsweise DAB, oder individuelle Kommunikation, beispielsweise GSM, in den Benutzerspeicher (38) ladbar sind.

## Claims

1. Method for operating a navigation system for a vehicle, in particular a motor vehicle, in which data relating to geographic positions of the vehicle is determined by a locating system (2) and is transmitted to a device for electronic data processing with access to the database (14) and a digital road map, and by means of this data the location of the vehicle on the digital road map is determined, and routing instructions are output visually and/or acoustically to the driver of the vehicle, wherein additional information which is relevant for navigation, in the form of user programs (30) which are platform-independent within an operating system and can be executed independently of the operating system, are loaded onto the navigation system, wherein specific functions are executed by each of these user programs (30), one group of which functions is tailored to the respective requirement of the user and the remainder of the functions are predefined on a standard basis in order to store additional information in the navigation system, wherein said information can be called by the driver and/or other persons located in the vehicle and can be output via the navigation system, and wherein each of these user programs (30) has a text notification system which is called if there is correspondence or partial correspondence of a given text with the instantaneous destination address, intermediate destination address, address of the instantaneous position or an entry in the route list (16), wherein different notification system functions can be defined for the various criteria.

2. Method according to Claim 1, **characterized in that** the functions of the navigation component (10) are used by the user programs (30) via interfaces (34, 36) of the navigation system.

3. Method according to Claim 1, **characterized in that** the following functions of the navigation component (10) are used by the user programs (30):
- interrogation and setting of destinations and intermediate destinations by means of destination addresses or destination coordinates;
- interrogation of the current position as a text or coordinates;
- interrogation of the current route list (16);
- interrogation of the estimated travel time to the next (partial) destination;
- function for setting parameters, for example the times for periodic calls or the criteria for geometric notification systems;
- interrogation of the type of the navigation system (10) and of the update level of the firmware, of the type and of the update level of the database (map) etc.

4. Method according to Claim 3, **characterized in that** each user program (30) has an initialization function which is called when the user program (30) is installed on the navigation system for the first time.

5. Method according to Claim 3, **characterized in that** each user program (30) has a delete function which is called when the user program (30) is removed.

6. Method according to Claim 3, **characterized in that** each user program (30) has a start function which is called once when the vehicle starts or when the navigation starts.

7. Method according to Claim 3, **characterized in that** each user program (30) has a function for periodic calls, which is called at regular time intervals and is used by the user program (30) to update internal data.

8. Method according to Claim 3, **characterized in that** each user program (30) has a geometric notification system which is called if a predefined geometric criterion is met, in particular such a criterion as distance from a given point or the position within a specific region.

9. Method according to Claim 3, **characterized in that** each user program (30) has further notification system functions such as input of a traffic message channel (TMC) message or a message of another service, for example the GSM.

10. Navigation system for a vehicle, in particular a motor vehicle, having a locating system (20), a device for electronic data processing, which has access to a database (14) with a digital road map, an input unit (24) and output unit (26, 28) for a visual and/or acoustic routing instruction, wherein the navigation system is composed of two main units (10, 12), wherein one of the main units is a navigation component (10) having the components of a navigation device, wherein the navigation device is autonomously functionally capable, and the other main unit is a device component (12) for executing user programs (30), which device component (12) is connected to the navigation component (10) via interfaces (34, 36), wherein the user programs (30) are configured so as to be platform-independent within the operating system and capable of being executed independently of the operating system, wherein specific functions can be executed by each user program (30), wherein one group of the functions is tailored to the requirement of the user and the remainder of the functions are predefined on a standard basis, and wherein each user program (30) has a text notification system which is called if there is correspondence or partial correspondence of a given text with the instantaneous destination address, intermediate address, address of the instantaneous position or an entry in the route list (16), wherein different notification system functions can be defined for the various criteria.

11. Navigation system according to Claim 10, **characterized in that** the navigation component (10) of the navigation system is composed essentially of a database (14), a route list (16), a route calculation model (18), a locating system (20), a routing unit (22), an input unit (24) for the operator control of the navigation system and in each case an acoustic output unit (28) for outputting acoustic instructions and information and a visual output unit (26) for outputting visual instructions and information.

12. Navigation system according to Claims 10 and 11, **characterized in that** the device component (10) of the navigation system is composed essentially of a user memory (38) and a virtual machine (32).

13. Navigation system according to Claims 10 and 12, **characterized in that** the user programs (30) can be stored in the user memory (38).

14. Navigation system according to Claims 10 and 13, **characterized in that** the device component (12) of the navigation system is preferably connected to the navigation component (10) via two interfaces (34, 36).

15. Navigation system according to Claim 14, **characterized in that** in each case the user memory (38) is connected to the navigation device via a first interface (34), and the virtual machine (32) is connected to the input unit (24) and the output units (26, 28) via a second interface (36).

16. Navigation system according to Claims 10 and 15, **characterized in that**, in addition to the existing interfaces (34, 36), further interfaces for transmitting data, in particular by means of infrared or radio, are provided, and said interfaces can be activated and used by the user programs (30).

17. Navigation system according to Claim 10, **characterized in that** the user programs (30) are preferably written in a platform-independent programming language.

18. Navigation system according to Claim 17, **characterized in that** the user programs (30) are preferably written in the JAVA programming language.

19. Navigation system according to Claims 10 and 19, **characterized in that** each user program (30) has internal data and functions.

20. Navigation system according to Claim 19, **characterized in that** each user program (30) has standard minimum functions in addition to the internal data and functions.

21. Navigation system according to Claim 21, **characterized in that** the standard minimum functions of the user programs (30) are the following functions:
- initialization function;
- delete function;
- start function;
- function for periodic calls;
- text notification system;
- geometric notification system;
- further notification system functions.

22. Navigation system according to one of the preceding claims, **characterized in that** the user programs (30) can be loaded into the user memory (38) in different ways.

23. Navigation system according to Claim 22, **characterized in that** the user programs (30) can be loaded into the user memory (38) by means of a storage medium, preferably RAM, Flash ROM, mini hard disk, CD-ROM or DVD.

24. Navigation system according to Claim 22, **characterized in that** the user programs (30) can be loaded into the user memory (38) from a PC, laptop or PDA by means of wirebound or wireless transmission, for example infrared or radio.

25. Navigation system according to Claim 22, **characterized in that** the user programs (30) can be loaded into the user memory (38) by transmission from a server using Broadcast, for example DAB, or individual communication, for example GSM.

## Revendications

1. Procédé de gestion d'un système de navigation d'un véhicule, notamment d'un véhicule automobile, selon lequel un système de localisation (2) détermine des données de positionnement géographique du véhicule et les transmet à une installation de traitement électronique de données avec accès à la bande de données (14) et une carte routière numérique et à l'aide de ces données on détermine l'emplacement du véhicule sur la carte routière numérique et on les fournit au conducteur sous forme d'indications visuelles et/ ou acoustiques de guidage vers la destination,
des informations supplémentaires concernant la navigation, se présentant sous la forme de programmes d'utilisateur (30) exécutables dans un système de gestion, indépendamment de la plate-forme et indépendamment du système de gestion, étant chargées sur le système de navigation,
on exécute des fonctions déterminées de chacun de ces programmes d'utilisateur (30), une partie des fonctions étant dirigée vers la demande respective de l'utilisateur et l'autre partie des fonctions étant prédéfinie de façon standard pour mémoriser des informations supplémentaires dans le système de navigation,
ces informations étant appelées par le conducteur et/ou par d'autres personnes occupant le véhicule pour être émises par le système de navigation et
chacun de ces programmes d'utilisateur (30) dispose d'informations sous forme de textes qui sont appelés lorsqu'il y a une concordance ou une concordance partielle entre un texte déterminé et l'adresse de destination momentanée, l'adresse de destination intermédiaire, l'adresse de la position momentanée ou l'enregistrement dans la liste de trajet (10),
et pour les différents critères on peut définir des fonctions d'informations différentes.

2. Procédé selon la revendication 1,
**caractérisé en ce que**
les fonctions de la partie de navigation (10) sont utilisées dans les programmes d'utilisateur (30) par les interfaces (34, 36) du système de navigation.

3. Procédé selon la revendication 1,
**caractérisé en ce que**
les fonctions de la partie de navigation (10) des programmes d'utilisateur (30) suivantes sont employées :
- interrogation et mise en place de destinations et de destinations intermédiaires par des adresses de destinations ou des coordonnées de destinations,
- interrogation de la position actuelle comme texte ou comme coordonnées,
- interrogation de la liste actuelle de trajets (16),
- interrogation du temps de parcours évalué vers la destination (destination partielle) suivante,
- fonction de mise à l'état de paramètres, par exemple des temps pour les appels périodiques ou les critères d'informations géométriques,
- interrogation du type de système de navigation (10) et de l'état de révision du matériel, du type et de l'état de révision de la base de données (carte) etc....

4. Procédé selon la revendication 3,
**caractérisé en ce que**
chaque programme d'utilisateur (30) dispose d'une fonction d'initialisation qui est appelée lorsque le programme d'utilisateur (30) est installé la première fois dans le système de navigation.

5. Procédé selon la revendication 3,
**caractérisé en ce que**
chaque programme d'utilisateur (30) dispose d'une fonction d'effacement qui est appelée lorsqu'on enlève le programme d'utilisateur (30).

6. Procédé selon la revendication 3,
**caractérisé en ce que**
chaque programme d'utilisateur (30) dispose d'une fonction de démarrage qui est appelée une seule fois au démarrage du véhicule ou au démarrage de la navigation.

7. Procédé selon la revendication 3,
**caractérisé en ce que**
chaque programme d'utilisateur (30) dispose d'une fonction pour les appels périodiques dans le temps qui est appelée intervalle de temps régulier et qui est utilisée par le programme d'utilisateur (30) pour actualiser les données internes.

8. Procédé selon la revendication 3,
**caractérisé en ce que**
chaque programme d'utilisateur (30) dispose d'une information géométrique qui est appelée si un critère géométrique prédéfini est rempli, notamment un critère tel que la distance par rapport à un point donné ou la position à l'intérieur d'une certaine région.

9. Procédé selon la revendication 3,
**caractérisé en ce que**
chaque programme d'utilisateur (30) dispose d'autres fonctions d'informations telles que l'entrée d'un message de canal de message de trafic (TMC) ou d'un message d'un autre service, par exemple le système GSM.

10. Système de navigation pour un véhicule, notamment un véhicule automobile comportant un système de localisation (20), une installation de traitement électronique de données qui a un accès à une banque de données (14) contenant une carte routière numérique, une unité d'entrée (24) et une unité de sortie (26, 28) pour une indication de guidage visuelle et/ ou acoustique vers la destination,
le système de navigation se composant de deux unités principales (10, 12), l'une des unités principales étant une partie de navigation (10) avec des composants d'un appareil de navigation,
l'appareil de navigation pouvant fonctionner en autarcie et l'autre unité principale est une partie d'appareil (12) pour exécuter les programmes d'utilisateur (30), cette partie étant reliée par des interfaces (34, 36) à la partie de navigation (10),
les programmes d'utilisateur (30) étant réalisés de façon à pouvoir être exécutés dans le système de gestion, indépendamment d'une plate-forme et indépendamment du système de gestion,
chaque programme d'utilisateur (30) pouvant exécuter des fonctions déterminées,
une partie des fonctions étant orientée sur la demande de l'utilisateur et l'autre partie des fonctions étant prédéfinie de manière standardisée et chaque programme d'utilisateur (30) dispose d'informations en texte qui appelé s'il y a une concordance ou une concordance partielle entre un texte donné et l'adresse de destination momentanée, l'adresse intermédiaire, l'adresse de la position momentanée ou un enregistrement dans la liste des trajets (16),
et pour les différents critères on définit des fonctions d'informations différentes.

11. Système de navigation selon la revendication 10,
**caractérisé en ce que**
la partie de navigation (10) du système de navigation se compose principalement d'une banque de données (14), d'une liste de trajets (12), d'un modèle de calcul de trajet (18), d'un système de localisation (20), d'une unité de guidage vers la destination (22), d'une unité d'entrée (24) pour mettre en oeuvre le système de navigation et chaque fois une unité de sortie acoustique (28) pour émettre des informations acoustiques et une unité de sortie visuelle (26) pour émettre des indications visuelles et des informations.

12. Système de navigation selon les revendications 10 et 11,
**caractérisé en ce que**
la partie d'appareil (10) du système de navigation se compose principalement d'une mémoire d'utilisateur (38) et d'une machine virtuelle (32).

13. Système de navigation selon les revendications 10 et 12,
**caractérisé en ce que**
la mémoire d'utilisateur (38) contient l'enregistrement de programme d'utilisateur (30).

14. Système de navigation selon les revendications 10 et 13,
**caractérisé en ce que**
la partie d'appareil (12) du système de navigation est reliée à la partie de navigation (10), de préférence par deux interfaces (34, 36).

15. Système de navigation selon la revendication 14,
**caractérisé en ce que**
la mémoire d'utilisateur (38) est reliée par une première interface (34) à l'appareil de navigation et la machine virtuelle (32) est reliée par une seconde interface (36) à l'unité d'entrée (24) et aux unités de sortie (26, 28).

16. Système de navigation selon les revendications 10 et 15,
**caractérisé en ce qu'**
en plus des interfaces existantes (34, 36) il y a d'autres interfaces pour la transmission de données, notamment par une liaison infrarouge ou une liaison radio, et qui peuvent être activées et utilisées par les programmes d'utilisateur (30).

17. Système de navigation selon la revendication 10,
**caractérisé en ce que**
les programmes d'utilisateur (30) sont inscrits de préférence dans un langage de programme indépendamment de la plate-forme.

18. Système de navigation selon la revendication 17,
**caractérisé en ce que**
les programmes d'utilisateur (30) sont écrits de préférence en langage de programmation « JAVA ».

19. Système de navigation selon les revendications 10 et 19,
**caractérisé en ce que**
chaque programme d'utilisateur (30) dispose de données de fonctions internes.

20. Système de navigation selon la revendication 19,
**caractérisé en ce que**
chaque programme d'utilisateur (30) dispose de fonctions minimales standardisées en plus des données internes et des fonctions.

21. Système de navigation selon la revendication 20,
**caractérisé en ce que**
les fonctions minimales standardisées des programmes d'utilisateur (30) sont les fonctions suivantes :
- fonction d'initialisation,
- fonction d'effacement,
- fonction de démarrage,
- fonction d'appel périodique - informations en texte
- information géométrique
- autres fonctions d'informations.

22. Système de navigation selon l'une des revendications précédentes,
**caractérisé en ce que**
les programmes d'utilisateur (30) peuvent être chargés de différentes manières dans les mémoires d'utilisateur (38).

23. Système de navigation selon la revendication 22,
**caractérisé en ce que**
les programmes d'utilisateur (30) sont chargés dans la mémoire d'utilisateur (38) par l'intermédiaire d'un support de mémoire, de préférence une mémoire RAM, une mémoire flash ROM, un mini disque dur, un disque CD-ROM ou un disque DVD.

24. Système de navigation selon la revendication 22,
**caractérisé en ce que**
les programmes d'utilisateur (30) sont chargés dans la mémoire d'utilisateur (38) par une transmission avec ou sans fil, par exemple une liaison infrarouge ou une liaison radio, à partir d'un PC, d'un petit PC ou d'un PDA (Assistant Personnel Electronique).

25. Système de navigation selon la revendication 22,
**caractérisé en ce que**
les programmes d'utilisateur (30) sont chargés dans la mémoire d'utilisateur (38) par transmission à partir d'un serveur, par radio, par exemple par une liaison DAB ou par communication individuelle, par exemple le système GSM.
